Europäisches Patentamt

European Patent Office

Office européen des brevets

(19)

(11) Veröffentlichungsnummer: **0 049 210**
**A1**

(12) ## EUROPÄISCHE PATENTANMELDUNG

(21) Anmeldenummer: **81730085.8**

(22) Anmeldetag: **01.09.81**

(51) Int. Cl.³: **H 04 M 3/60, H 04 Q 3/00**

(30) Priorität: **30.09.80 DE 3037361**

(43) Veröffentlichungstag der Anmeldung: **07.04.82**
**Patentblatt 82/14**

(84) Benannte Vertragsstaaten: **AT BE CH FR GB IT LI NL SE**

(71) Anmelder: **SIEMENS AKTIENGESELLSCHAFT Berlin und München, Postfach 22 02 61, D-8000 München 22 (DE)**

(72) Erfinder: **Achmüller, Andreas, Ing.grad., Oberstdorferstrasse 12, D-8000 München 71 (DE)**

(54) **Schaltungsanordnung für zentralgesteuerte Fernsprechanlagen, insbesondere Fernsprechnebenstellenanlagen und private Fernsprechsonderanlagen, mit teilnehmerstellen- und/oder vermittlungsplatzorientierten Betriebsbereitschaftsanzeigemitteln.**

(57) Jeder Teilnehmerstelle (TST) bzw. jedem Vermittlungsplatz (VPL) sind eine die Tastensatzabtastung und Anzeigesatzansteuerung bewirkende erste Steuereinrichtung (PEB) und jedem die Betriebsbereitschaftsanzeigemittel (BAM) aufweisenden übergeordneten Vermittlungsplatz (UVPL) zusätzlich eine Betriebsbereitschaftsanzeigemittel (BAM) ansteuernde zweite Steuereinrichtung (DAE) zugeordnet. Die erste und zweite Steuereinrichtung (PEB und DAE) des übergeordneten Vermittlungsplatzes sind über das Netzwerk (NW) mittels digitalgesteuerter Verbindungsleitung (VL) untereinander und mit der zentralen Steuereinrichtung (CC) verbunden.

Derartige Schaltungsanordnungen werden insbesondere für Flugsicherungsanlagen eingesetzt.

SIEMENS AKTIENGESELLSCHAFT    Unser Zeichen
Berlin und München    VPA 80 P 6424 E

Schaltungsanordnung für zentralgesteuerte Fernsprechanlagen, insbesondere Fernsprechnebenstellenanlagen und private Fernsprechsonderanlagen, mit teilnehmerstellen- und/oder vermittlungsplatzorientierten Betriebsbereitschaftsanzeigemitteln

Die Erfindung betrifft eine Schaltungsanordnung für zentralgesteuerte Fernsprechanlagen, insbesondere Fernsprechnebenstellenanlagen und private Fernsprechsonderanlagen, mit Teilnehmerstellen und/oder mehreren Vermittlungsplätzen und den Teilnehmerstellen und/oder den Vermittlungsplätzen jeweils zugeordneten Anschaltesätzen, Tastensätzen und Anzeigesätzen sowie mit allen Teilnehmerstellen und/oder Vermittlungsplätzen zugeordneten Betriebsbereitsschaftsanzeigemitteln, die zumindest einem übergeordneten Vermittlungsplatz zugeordnet sind.

Derartige Fernsprechanlagen sind in der Regel für private Fernsprechsondernetze vorgesehen, können aber auch an öffentliche Fernsprechnetze angeschaltet werden. Die Teilnehmerstellen und Vermittlungsplätze dieser Fernsprechanlagen sind je nach Bedarf bei einer Vielzahl von Tasten und Anzeigemitteln, wie Signallampen und Anzeigetableaus, ausgestattet, um einerseits alle notwendigen Schaltvorgänge - vermitteln, aufschalten, konferenzschalten, trennen etc. - steuern und andererseits den Betriebszustand der Fernsprechanlage überwachen zu können. Dabei können die Teilnehmerstellen und die Vermittlungsplätze auch in Gruppen zusammengefaßt sein, wenn der jeweils eine Teilnehmerstelle oder ein Vermittlungsplatz die Anschaltesätze, Tastensätze und Anzeigesätze

Kem 3 Sby / 23.09.1980

0049210

aufweist.

In der Regel weisen diese Fernsprechanlagen einen sämtlichen Vermittlungsplätzen bzw. sämtlichen Vermittlungsplatzgruppen übergeordneten Vermittlungsplatz auf, dem stets der momentane Betriebszustand der gesamten Fernsprechanlage mittels der Betriebsbereitschaftsanzeigemittel bekanntgegeben wird.

Der Erfindung liegt die Aufgabe zugrunde, die Ansteuerung der Tasten- und Anzeigesätze der Vermittlungsplätze und Teilnehmerstellen und die Betriebsbereitschaftsanzeigemittel des übergeordneten Vermittlungsplatzes mit geringem aparativen Aufwand zu realisieren und die Funktionsabläufe innerhalb der zentralgesteuerten Fernsprechanlage zu vereinheitlichen. Erfindungsgemäß wird dies dadurch erreicht, daß jeder Teilnehmerstelle bzw. jeder Teilnehmerstellengruppe und/oder jedem Vermittlungsplatz bzw. jeder Vermittlungsplatzgruppe eine die Tastensatzabtastung und Anzeigesatzansteuerung bewirkende ersten Steuereinrichtung und jedem die Betriebsbereitschaftsanzeigemittel aufweisenden übergeordneten Vermittlungsplatz zusätzlich eine die Betriebsbereitschaftsanzeigemittel ansteuernde zweite Steuereinrichtung zugeordnet sind und daß die erste und die zweite Steuereinrichtung des übergeordneten Vermittlungsplatzes über eine digital gesteuerte Verbindungsleitung und dem Netzwerk sowohl mit den zu überwachenden Teilnehmerstellen und/oder Vermittlungsplätzen als auch mit der zentralen Steuereinrichtung verbindbar sind.

Als wesentlich für die Erfindung ist anzusehen, daß sowohl jeder Teilnehmerstelle als auch jeder Teilnehmerstellengruppe und/oder jedem Vermittlungsplatz bzw.

jeder Vermittlungsplatzgruppe jeweils die gleiche die Tastensatzabtastung und Anzeigesatzansteuerung bewirkende ersten Steuereinrichtung zugeordnet ist. Lediglich der übergeordnete Vermittlungsplatz erhält zusätzlich die zweite Steuereinrichtung, mit der die Betriebsbereitschaftsanzeigemittel angesteuert werden. Die ersten und zweiten Steuereinrichtungen der Vermittlungsplätze und Teilnehmerstellen sowie des übergeordneten Vermittlungsplatzes sind über jeweilige Verbindungsleitungen über das Netzwerk sowohl untereinander als auch mit der zentralen Steuereinrichtung verbunden. Durch diese Schaltmaßnahme ist es möglich, sämtliche Betriebszustände der Teilnehmerstellen und Vermittlungsplätze ständig durch den übergeordneten Vermittlungsplatz überwachen zu lassen.

Gemäß einer vorteilhaften Ausgestaltung der Erfindung ist vorgesehen, daß die digital gesteuerte Verbindungsleitung eine Standverbindungsleitung innerhalb des Netzwerkes darstellt, und somit ständig zur Übertragung der Betriebsdaten zwischen den Teilnehmerstellen und den Vermittlungsplätzen und dem übergeordneten Vermittlungsplatz vorhanden ist.

Eine weitere vorteilhafte Ausgestaltung der Erfindung sieht vor, daß die Betriebsbereitschaftsanzeigemittel einen Besetzzustand, eine Verbindungsleitungs- und/oder Vermittlungsplatz- bzw. Teilnehmerstellenpriorität, einen Anrufüberlastzustand und eine Gesprächsüberleitung einer Teilnehmerstelle und/oder eines Vermittlungsplatzes optisch signalisieren. Mit dieser Überwachung der einzelnen Teilnehmerstellen und Vermittlungsplätze durch den übergeordneten Vermittlungsplatz ist es möglich, beispielsweise bei dem Anrufüberlastzustand einer bestimmten Teilnehmerstelle durch entsprechende Schaltmaßnahmen einer Anrufumleitung zu einer nicht so stark frequentierten Teilnehmerstelle oder zu einem Vermittlungsplatz zu schalten.

Eine weitere vorteilhafte Ausgestaltung der Erfindung sieht vor, daß die Betriebsbereitschaftsanzeigemittel als alpha-numerische Anzeigeeinrichtung ausgeführt ist, so daß die Bedienungsperson des übergeordneten Vermittlungsplatzes einen wesentlich besseren Überblick über den momentanen Betriebszustand der zentralgesteuerten Fernsprechanlage hat als das bei einem mit Lampen bestückten Tableau der Fall ist.

Die Erfindung wird in einem figürlich dargestellten Ausführungsbeispiel näher erläutert, indem lediglich die zum Verständnis der Erfindung notwendigen Schalteinrichtungen dargestellt sind.

Die zentralgesteuerte Fernsprechanlage weist u. a. das Netzwerk NW und die zentrale Steuereinrichtung CC auf. Die den jeweiligen Teilnehmerstellen TST und den Vermittlungsplätzen VPL sowie dem übergeordneten Vermittlungsplatz UVPL zugeordnete erste Steuereinrichtung PEB steht über die Verbindungsleitung VL mit dem Netzwerk NW und der zentralen Steuereinrichtung CC in Verbindung. Die Vermittlungsplätze VPL und die Teilnehmerstellen TST weisen jeweils nicht bezeichnete Tastensätze auf, die außerdem mit optischen Anzeigesätzen beispielsweise in Form von Lampen bestückt sind. Der übergeordnete Vermittlungsplatz UVPL weist zusätzlich die Betriebsbereitschaftsanzeigemittel BAM auf, die der Bedienungsperson des übergeordneten Vermittlungsplatzes UVPL den genauen Betriebszustand der zentralgesteuerten Fernsprechanlage jederzeit
anzeigt. Zur Steuerung der Betriebsbereitschaftsanzeigemittel BAM ist für den übergeordneten Vermittlungsplatz
UVPL die zweite Steuereinrichtung DAE vorgesehen.

Beim Betätigen einer Taste eines Vermittlungsplatzes
VPL oder einer Teilnehmerstelle TST wird mit der ersten
Steuereinrichtung des entsprechenden Vermittlungsplatzes
VPL oder der Teilnehmerstelle TST mit Hilfe der Tastensatzabtastung diese Zustandsänderung erkannt und über die
entsprechende digital gesteuerte Verbindungsleitung
VL, das Netzwerk NW und der dem übergeordneten Vermittlungsplatz UVPL zugeordneten digital gesteuerten Verbindungsleitung VL der ersten Steuereinrichtung PEB des übergeordneten Vermittlungsplatzes UVPL übertragen.
Entsprechend der Ansteuerung der Betriebsbereitschaftsanzeigemittel BAM des übergeordneten Vermittlungsplatzes
UVPL wird die Tastenzustandsänderungsinformation von
der ersten Steuereinrichtung PEB zur zweiten Steuereinrichtung DAE übertragen und von dort direkt zur Ansteuerung der Betriebsbereitschaftsanzeigemittel BAM umgewertet.

Vom übergeordneten Vermittlungsplatz UVPL, der in gleicher
Weise wie die anderen Vermittlungsplätze VPL und die
Teilnehmerstellen TST ebenfalls mit Tastensätzen und
Anzeigesätzen ausgestattet ist, gelangt die Tastenänderungsinformation in die ersten Steuereinrichtung PEB und
wird von dieser direkt über die zweite Steuereinrichtung
DAE zur Ansteuerung der entsprechenden Betriebsbereitschaftsanzeigemittel BAM des übergeordneten Vermittlungsplatzes UVPL umgewertet.

<u>Patentansprüche</u>

1. Schaltungsanordnung für zentralgesteuerte Fernsprechanlagen, insbesondere Fernsprechnebenstellenanlagen und private Fernsprechsonderanlagen, mit teilnehmerstellen- und/oder mehreren Vermittlungsplätzen und den Teilnehmerstellen und/oder den Vermittlungsplätzen jeweils zugeordneten Anschaltesätzen, Tastensätzen und Anzeigesätzen sowie mit allen Teilnehmerstellen und/oder Vermittlungsplätzen zugeordneten Betriebsbereitschaftsanzeigemitteln, die zumindest einem übergeordneten Vermittlungsplatz zugeordnet sind, d a d u r c h   g e k e n n z e i c h n e t , daß jeder Teilnehmerstelle (TST) bzw. jeder Teilnehmerstellengruppe und/oder jedem Vermittlungsplatz (VPL) bzw. jeder Vermittlungsplatzgruppe eine die Tastensatzabtastung und Anzeigesatzansteuerung bewirkende erste Steuereinrichtung (PEB) und jedem die Betriebsbereitschaftsanzeigemittel (BAM) aufweisenden übergeordneten Vermittlungsplatz (UVPL) zusätzlich eine die Betriebsbereitschaftsanzeigemittel (BAM) ansteuernde zweite Steuereinrichtung (DAE) zugeordnet sind und daß die erste und die zweite Steuereinrichtung (PEB und DAE) des übergeordneten Vermittlungsplatzes (UVPL) über eine digitalgesteuerte Verbindungsleitung (VL) und dem Netzwerk (NW) sowohl mit den zu überwachenden Teilnehmerstellen (TST) und/oder Vermittlungsplätzen (VPL) als auch mit der zentralen Steuereinrichtung (CC) verbindbar sind.

2. Schaltungsanordnung nach Anspruch 1 , d a d u r c h   g e k e n n z e i c h n e t , daß die digitalgesteuerte Verbindungsleitung (VL) eine Standverbindungsleitung innerhalb des Netzwerkes (NW) darstellt.

3. Schaltungsanordnung nach Anspruch 1 , d a d u r c h   g e k e n n z e i c h n e t , daß die Betriebsbereitschafts-

Kem 3 Sby / 23.09.1980

anzeigemittel (BAM) einen Besetztzustand, eine Verbindungsleitungs- und/oder Vermittlungsplatz- bzw. Teilnehmerstellenpriorität, einen Anrufüberlastzustand und eine Gesprächsüberleitung einer Teilnehmerstelle (TST) und/oder
eines Vermittlungsplatzes (VPL) optisch signalisieren.

4. Schaltungsanordnung nach Anspruch 3 , d a d u r c h
g e k e n n z e i c h n e t , daß die Betriebsbereitschaftsanzeigemittel (BAM) als alphanumerische Anzeigeeinrichtung
ausgeführt ist.

Europäisches
Patentamt

**EUROPÄISCHER RECHERCHENBERICHT**

EP 81 73 0085

| | EINSCHLÄGIGE DOKUMENTE | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| | ERICSSON REVIEW, Band 56, Nr. 3, 1979, Stockholm, SE. G. JISMALM et al. "Office communication system DIAVOX 824" Seiten 124-129 <br><br> * Seite 125, linke Spalte, Zeilen 3-8; Seite 127, rechte Spalte, Zeile 15 bis Seite 128, linke Spalte, Zeile 15; Figur 11 * <br><br> -- | 1 | H 04 M 3/60 <br> H 04 Q 3/00 |
| | GB - A - 1 464 615 (PLESSEY) <br><br> * Seite 1, Zeilen 21-33; Seite 6, Zeile 120 bis Seite 7, Zeile 88; Figur 5 * <br><br> -- | 1 | RECHERCHIERTE SACHGEBIETE (Int. Cl.³) <br><br> H 04 M 3/60 <br> 3/62 <br> 3/64 <br> H 04 Q <br> H 04 M 9/02 |
| | US - A - 4 154 988 (FECHALOS) <br><br> * Spalte 9, Zeile 30 bis Spalte 10, Zeile 9 * <br><br> -- | 1 | |
| | ELECTRICAL COMMUNICATION, Band 55, Nr. 1, 1980, New York, US H.D. SIEBEL: "Peripheral devices for the unimat 4080 PABX" Seiten 57-62 <br><br> * Seite 61, rechte Spalte, Zeile 1 bis Seite 62, rechte Spalte, Zeile 3 * <br><br> ------ | 1,4 | KATEGORIE DER GENANNTEN DOKUMENTE <br><br> X: von besonderer Bedeutung <br> A: technologischer Hintergrund <br> O: nichtschriftliche Offenbarung <br> P: Zwischenliteratur <br> T: der Erfindung zugrunde liegende Theorien oder Grundsätze <br> E: kollidierende Anmeldung <br> D: in der Anmeldung angeführtes Dokument <br> L: aus andern Gründen angeführtes Dokument <br> &: Mitglied der gleichen Patentfamilie, übereinstimmendes Dokument |

Der vorliegende Recherchenbericht wurde für alle Patentansprüche erstellt.

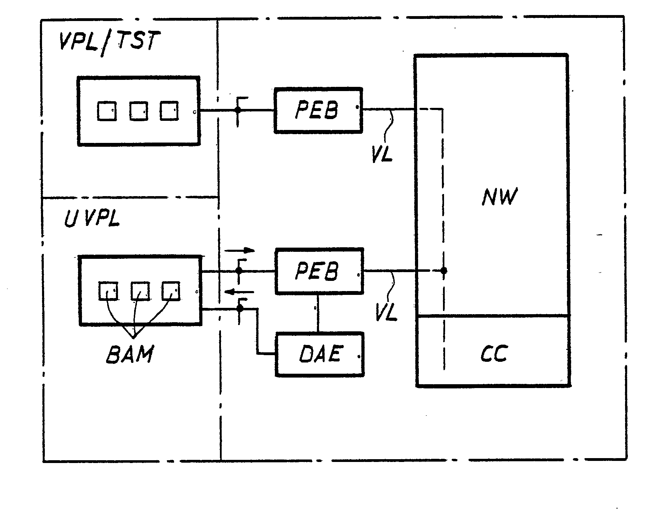

| Recherchenort | Abschlußdatum der Recherche | Prüfer |
|---|---|---|
| Den Haag | 05-01-1982 | VANDEVENNE |

EPA form 1503.1   06.78